# NOUVEAU FASCICULE DE BREVET EUROPEEN

(11) **EP 2 546 017 B2**
(45) Date de publication et mention de la décision concernant l'opposition: **24.04.2019**
(45) Mention de la délivrance du brevet: 16.09.2015
(21) Numéro de dépôt: 12172341.5
(22) Date de dépôt: 18.06.2012
(51) Int. Cl.: B23K 9/09, B23K 9/173, B23K 9/12

(54) **Procédé et dispositif de soudage à l'arc avec électrode consommable comprenant en alternance des cycles de soudage par court circuit et des cycles de soudage par transfert pulsé**
Lichtbogenschweißverfahren und -vorrichtung mit Abschmelzelektrode unter Verwendung von Kurzschlussschweisszyklen und pulsenden Transferierschweisszyklen
Method of and device for arc welding with consumable electrode using in alternance short circuit welding cycles and pulsed transfer welding cycles

(30) Priorité: 11.07.2011 FR 1156257
(43) Date de publication de la demande: 16.01.2013
(73) Titulaire: AIR LIQUIDE WELDING FRANCE, 75007 Paris (FR)
(72) Inventeur: BURVELLE, Nicolas, 92600 Asnières sur Seine (FR); Chevalier, Richard, 95300 Pontoise (FR); Planckaert, Jean-Pierre, 60240 Monneville (FR); PLOTTIER, Gérard, 95460 Ezanville (FR)
(74) Mandataire: Knauer, Joachim

(56) Documents cités:
- EP-A1- 1 985 400
- EP-A1- 2 058 078
- EP-A1- 2 455 177
- WO-A1-2005/042199
- JP-A- 7 009 149
- JP-A- 2011 088 209
- US-A1- 2006 138 115
- US-B1- 6 515 259
- "MIG MAG Schweisskurs 2005", ISO-Elektrodenfabrik AG, 26 August 2013 (2013-08-26), pages 1-64, XP055293865, Schweiz Retrieved from the Internet: URL:http://www.isoarc.ch/download/pdf/MIG% 20MAG%20Schweisskurs%20Unterlagen%202005.p df

## Description

La présente invention concerne le domaine du soudage à l'arc électrique, et plus particulièrement, un procedé et un dispositif de soudage à l'arc avec une électrode consommable dans laquelle circule un courant électrique, et une protection gazeuse du bain de soudure, conformément au préambule des revendications 1 et 10 (voir JP 07/009149 A, par exemple).

Dans ce domaine, on distingue le soudage MIG et le soudage MAG ; le premier désigne un soudage sous gaz inerte, le second désigne un soudage sous gaz actif. Cette technique de soudage vise notamment le soudage de tôles revêtues ou non.

L'électrode consommable est un fil fusible alimenté en un courant électrique. La chaleur dégagée par l'arc électrique qui se crée à l'extrémité libre du fil provoque la fusion de cette extrémité libre, qui constitue le métal d'apport, et du métal de base des pièces à souder en formant ainsi un bain de fusion qui après solidification donne le joint de soudure désiré. On maintient le bain de fusion sous une atmosphère gazeuse de composition adaptée pour le protéger des contaminations éventuelles.

Pour ce faire, on met classiquement en oeuvre un dispositif de soudage comportant un moyen d'alimentation en courant électrique, tel un générateur de courant avec un circuit de commande, une source de gaz, une torche de soudage MIG/MAG, une bobine d'alimentation en fil fusible alimentant une unité d'entraînement de fil, tel un dévidoir de fil. Une conduite alimente la torche en gaz de protection provenant de la (ou des) source de gaz. Un câble de contrôle relie le générateur à l'unité d'entraînement du fil fusible afin d'adapter l'intensité du courant à la vitesse d'avance du fil. Le passage du courant est contrôlé par le circuit de commande pour former un arc et chauffer l'extrémité du fil située en regard des pièces à souder et donc aussi du bain de soudure. Le chauffage est contrôlé pour entraîner la fusion de l'extrémité libre du fil, ce qui provoque la formation d'une (ou plusieurs) goutte de métal qui est déposée au niveau de la zone de soudure, c'est-à-dire du plan de joint.

Plus précisément, le transfert de métal depuis l'électrode peut se faire selon un premier mode de fonctionnement connu, appelé transfert par court-circuit. Ce mode de transfert par court circuit est obtenu pour de faibles énergies d'arc, pour une intensité de moins de 200A et une tension de l'ordre de 14 à 20V, et se caractérise par la formation d'une goutte de métal fondu au bout du fil venant en contact avec le bain de métal liquide. Lors du contact, le courant augmente rapidement faisant alors apparaître un pincement ou striction facilitant le détachement de la goutte de métal fondu et son dépôt dans le bain de soudure. Ce phénomène se répète cycliquement à une fréquence de 50 à 200 Hz. Cette technique de soudage par court-circuit est utilisée pour le soudage des pièces de faible épaisseur, moins de 5 mm, grâce à la possibilité de maîtriser le bain de fusion. Cependant, l'arc produit est court et instable, et il conduit à des projections sur les pièces à souder, ce qui nuit à la qualité du soudage.

Dans le but de mieux contrôler le courant et de limiter les projections se produisant lors de la rupture du col de la goutte, le document EP-A-2058078 propose un procédé de soudage à l'arc, dans lequel se succèdent au cours du temps des cycles de soudage comprenant chacun une période d'arc et une période de court-circuit où le métal liquide établit un court-circuit entre l'extrémité fondue de l'électrode consommable et la pièce à souder et selon lequel on contrôle l'intensité du courant fourni au fil fusible en relation avec sa vitesse de déroulement.

Du fait de l'augmentation, au cours de la période de court-circuit, de l'intensité de courant combinée à la diminution de la vitesse de déroulement du fil de l'électrode, on parvient à assurer un transfert rapide et bien contrôlé de la goutte de métal fondu, en évitant les projections. En d'autres termes, on contrôle le détachement de la goutte par la combinaison des effets de décélération du fil et d'impulsion du courant. Cette technique est désignée DCSC pour *« dual control short circuit »* ou court-circuit à contrôle dual.

Les avantages liés à cette technique sont, outre la maîtrise du détachement de la goutte, la suppression des projections et l'abaissement de la quantité d'énergie amenée à la pièce à souder.

Cependant, ce procédé essentiellement destiné au transfert par court-circuit connaît une limitation dans son domaine d'application. Au-delà d'un certain niveau d'énergie, le détachement des gouttes est erratique avec d'importantes projections, et il ne permet plus le transfert par court-circuit. Il s'agit de la plage d'existence du régime que l'on désigne par le terme de globulaire.

On connaît par ailleurs le mode de soudage par transfert pulsé. Il consiste à souder par courant pulsé en choisissant les paramètres de pulsation de telle sorte qu'il y ait pour chacune des impulsions un transfert de type « spray-arc » avec une seule goutte de métal transféré du fil fusible vers le cordon de soudure, par impulsion. On désigne par la suite soudage par transfert pulsé ou simplement soudage pulsé, le soudage qui présente ces caractéristiques.

Le régime « spray-arc » désigne quant à lui un régime de pulvérisation axiale dans lequel un chapelet de petites gouttes de métal fondu s'échappe régulièrement de l'extrémité du fil en fusion.

Le transfert pulsé ne peut pas être utilisé à tous les niveaux d'énergie en substitution de la technique de transfert par court-circuit contrôlé.

A faible énergie ou à basse vitesse du fil, le courant pic est directement lié à un détachement correct de la goutte. Il existe un seuil minimum permettant le détachement de la goutte qui dépend de la nature du fil fusible, du gaz et d'autres paramètres...

La capacité des générateurs à fournir un courant stable à basse intensité peut aussi poser problème. Il existe ainsi également un minimum imposé par le matériel.

Il serait possible de diminuer l'énergie en réduisant le temps de courant pic mais celui-ci est physiquement lié au temps caractéristique de formation de la goutte ; il admet donc un seuil minimum pour conserver un transfert correct.

Il serait possible aussi de réduire la fréquence de pulse. Mais en dessous d'une 30e de Hertz, l'oeil perçoit le scintillement de l'arc, ce qui occasionne une fatigue oculaire de l'opérateur.

A vitesse de défilement du fil classique, 4 à 5 m/min, le transfert pulsé amène plus d'énergie à la pièce. Ceci induit le risque de percer la tôle mais aussi d'induire une zone affectée thermiquement plus large.

Si on essaie à vitesse fil identique d'amener le moins d'énergie possible en transfert pulsé, on obtient un arc court. Cet arc court peut provoquer des courts-circuits intempestifs et donc des projections. En outre lors de la réinjection de courant, une remontée de l'arc se produit et peut créer une instabilité qualifiée de pompage. L'agitation du bain est également nuisible à la bonne maîtrise du soudeur.

Par ailleurs, certains procédés utilisant le court-circuit contrôlé appliquent une vitesse négative au fil durant le temps du court-circuit. Ces procédés impliquent la mise en oeuvre de moyens permettant d'imposer une vitesse négative au fil de l'électrode ; les dispositifs sont plus complexes pour cette raison.

Il est également connu d'alterner des cycles de soudage par court-circuit et des cycles de soudage par transfert pulsé, tel que proposé dans les documents JP 07/009149 A, JP-A-2011088209 et JP-A-2010082641. Toutefois, la vitesse de déroulement du fil de l'électrode n'est pas contrôlée au cours des cycles de court-circuit, ce qui ne conduit pas à une solution pleinement satisfaisante en termes de qualité de soudage, notamment en termes de suppression des projections et de maîtrise de l'apport de chaleur sur la tôle.

Ainsi, ces différentes techniques de soudage ne permettent pas d'appliquer une large étendue d'énergie en fonction des pièces à souder.

L'invention a donc pour objectif, en partant de la technique connue de soudage à l'arc par court-circuit, d'élever le seuil d'énergie pouvant être appliqué.

L'invention concerne alors un procédé de soudage à l'arc avec électrode consommable dont une extrémité est progressivement fondue par un courant électrique alimentant l'électrode, ledit procédé comprenant un nombre n₁, n₁>=1 de cycles de soudage par court-circuit alternant avec un nombre n₂, n₂>=1 de cycles de soudage par transfert pulsé, lesquels cycles de soudage par court-circuit comprennent chacun une période d'arc suivie d'une période de court-circuit où le métal en fusion établit un court-circuit avec un bain de fusion, dans lequel un déplacement de l'électrode à une vitesse V₁ pendant la période d'arc et une diminution de la vitesse de déplacement de l'électrode jusqu'à une valeur V₃, V₃<V₁, au cours de la période de court-circuit, et un déplacement de l'électrode à une vitesse Vₚ pendant le cycle par transfert pulsé, la vitesse Vₚ étant supérieure à la vitesse V₁.

Lesdits cycles de soudage par court-circuit comprennent chacun, par exemple, une période d'arc suivie d'une période de court-circuit où le métal en fusion établit un court-circuit avec un bain de fusion.

Par cycle de soudage par transfert pulsé, on entend des cycles de soudage dans lesquels une intensité du courant fourni à l'électrode consommable est supérieure à 300 A, notamment supérieur à 350 A.

Grâce à l'invention, on peut complètement maîtriser l'apport d'énergie souhaité à la pièce, en autorisant un taux maximum de dépôt sans projection. L'utilisateur décide en fonction de son application du nombre de cycles de soudage pulsé à intercaler entre les cycles de soudage par court-circuit. Par exemple, le processus de soudage peut comprendre deux cycles de soudage pulsé tous les trois cycles de soudage par court-circuit, soit n₁ = 3 et n₂ = 2. Par ce contrôle entre les deux modes de soudage, on peut mieux contrôler la géométrie du cordon de soudure et celle de la zone affectée thermiquement.

En outre, le contrôle de la vitesse de déplacement de l'électrode pendant les cycles de soudage par court-circuit permet d'assurer un transfert rapide et mieux contrôlé de la goutte de métal fondu, et d'éviter les projections. De plus, un cycle de soudage par court-circuit contrôlé présente un apport de chaleur réduit par rapport à un cycle de soudage par court-circuit classique, c'est-à-dire non contrôlé, et donc des risques de déformations de la tôle moindres, en particulier des tôles de fines épaisseurs.

Selon différents modes de réalisation de l'invention, qui pourront être pris ensemble ou séparément :
- le procédé comprend plusieurs cycles de soudage par court-circuit à la suite entre au moins un cycle de soudage par transfert pulsé,
- le procédé comprend plusieurs cycles de soudage par transfert pulsé à la suite entre au moins deux cycles de soudage par court-circuit successifs,
- le procédé comprend une étape préalable de paramétrage du nombre n₁ desdits cycles de soudage par court-circuit et n₂ desdits cycles de soudage par transfert pulsé, en fonction de l'opération de soudage à effectuer,
- les cycles de soudage par transfert pulsé sont intercalés entre les cycles de soudage par court-circuit durant une période d'arc desdits cycles de soudage par court-circuit,
- la vitesse Vₚ de déplacement de l'électrode de soudage pendant le cycle de soudage par transfert pulsé est constante,
- le cycle de soudage par transfert pulsé comprend un temps chaud pendant lequel l'électrode est alimentée par un courant d'une intensité I_{H} et un temps froid pendant lequel l'électrode est alimentée par un courant d'une intensité I_{B}<I_{H}, la vitesse de déplacement du fil variant entre une valeur V_{PH} pendant le temps chaud et une valeur V_{PB} distincte de V_{PH} pendant le temps froid.
- les cycles de soudage par court-circuit comprennent :
   - a) le maintien d'une intensité I₂ d'alimentation de l'électrode consommable pendant la période d'arc en même temps que le déplacement de l'électrode consommable à la vitesse V₁ ;
   - b) la diminution de l'intensité pour atteindre une intensité minimale I1 au début de la période de court-circuit, I₁<I₂ ;
   - c) la diminution de la vitesse de déplacement de l'électrode jusqu'à une valeur V₃, V₃ <V₁ au cours de la période de court-circuit ;
   - d) l'augmentation de l'intensité au cours de la période de court-circuit jusqu'à I₄, I₄>I₂ ;
   - e) suivie d'une diminution de l'intensité pour atteindre I₁<I₂.

Notamment la vitesse V₃ est conservée au début de la période d'arc.

Conformément à une autre caractéristique, l'augmentation de l'intensité au cours de la période de court-circuit se produit pendant la diminution de la vitesse de déplacement de l'électrode de l'étape c).

Conformément à une autre caractéristique, l'augmentation de l'intensité au cours de la période de court-circuit et la diminution de la vitesse de déplacement de l'électrode jusqu'à la vitesse minimale V₃ engendre le détachement d'au moins une goutte de métal fondu.

Pour parvenir à ce résultat, la valeur d'intensité maximale I₄ est maintenue pendant un palier alors que la vitesse de déplacement de l'électrode est maintenue à la vitesse minimale V₃.

Par vitesse de déplacement de l'électrode on entend la vitesse à laquelle l'électrode est fournie pendant les opérations de soudage. Il s'agit, notamment, d'une vitesse à laquelle un fil fusible constituant l'électrode est fourni.

Par ailleurs, une intensité du courant d'alimentation de l'électrode consommable varie selon une pente d'augmentation, respectivement de diminution, en début, respectivement en fin, des cycles de soudage par transfert pulsé. On diminue de la sorte le bruit généré par les opérations de soudage.

L'invention concerne également un dispositif de soudage à l'arc comprenant une électrode consommable dont une extrémité est progressivement fondue par un courant électrique alimentant l'électrode, ledit dispositif étant configuré pour la mise en oeuvre des étapes suivantes:
a) alimenter une extrémité de l'électrode pour progressivement fondre par un courant électrique ladite extrémité,
b) établir un procédé de soudage comprenant un nombre n₁, n₁>=1 de cycles de soudage par court-circuit alternant avec un nombre n₂, n₂>=1 de cycles de soudage par transfert pulsé, lesquels cycles de soudage par court-clrcuit comprennent chacun une période d'arc suivie d'une période de court-circuit où le métal en fusion établit un court-circuit avec un bain de fusion,
c) déplacer l'électrode à une vitesse V₁ pendant la période d'arc et diminuer la vitesse de déplacement de l'électrode jusqu'à une valeur V₃, V₃<V₁, au cours de la période de court-circuit, et déplacer l'électrode à une vitesse Vₚ pendant le cycle par transfert pulsé, la vitesse Vₚ étant supérieure à la vitesse V₁.

Ledit dispositif comprend, par exemple, des moyens pour appliquer des cycles de soudage par court-circuit et des moyens pour appliquer des cycles de soudage par transfert pulsé, de façon alternée.

Ledit dispositif pourra en outre comprendre des moyens de paramétrage de l'alternance des cycles de soudage par court-circuit et des cycles de soudage par transfert pulsé.

L'invention est décrite ci-après plus en détail en référence aux dessins annexés sur lesquels :
- La figure 1 représente au cours d'un cycle la variation d'intensité I du courant de soudage en fonction du temps, lors de la mise en oeuvre d'un exemple de procédé de soudage selon l'invention.
- La figure 2 représente le cycle de tension de soudage U entre l'électrode et le bain de fusion, correspondant.
- La figure 3 représente le cycle de vitesse de déplacement du fil correspondant.

Le procédé de l'invention comprend un cycle de soudage DCSC tel que décrit dans le document EP-A-2058078, auquel ont été adjoints des passages en régime pulsé.

Un cycle de soudage DCSC correspond aux variations entre les balises C₁ et C₂. Il comprend un temps de court-circuit de C₁ à A₁ où la tension est nulle et où le métal en fusion établit le court-circuit entre l'électrode consommable et le bain de fusion. Le court-circuit est suivi d'un temps d'arc de A₁ à C₂.

Comme cela est représenté, on maintient une intensité d'arc I₂ pendant une période (A₃ à A₄) du régime d'arc en même temps qu'on effectue le déplacement du fil vers la pièce à une vitesse sensiblement constante V₁, de manière à obtenir une goutte de métal en fusion au bout de l'électrode fusible.

Ensuite, on opère une diminution de l'intensité depuis I₂ pour atteindre à l'instant A₅ une intensité minimale I₁ au début de la période de court-circuit CC à l'instant C et ce dans le but d'éviter des irrégularités de morphologie du cordon résultant d'une intensité de soudage trop importante durant la phase d'approche de l'extrémité du fil vers le bain.

On procède en outre à une diminution de la vitesse de déplacement du fil depuis V₁ pour atteindre une vitesse minimale V₃, inférieure à V₁ au cours de la période de court-circuit afin d'initier ou d'améliorer la striction du pont liquide ou col entre le fil d'apport et le bain de soudage. On réalise alors une augmentation de l'intensité du courant au cours de la période de court-circuit entre les instants C et A pour atteindre une valeur I₄ supérieure ou égale à l'intensité d'arc I₂, de préférence I₄>I₂, ce qui permet de provoquer la striction du pont liquide entre le fil d'apport et le bain de soudage.

Enfin, on opère une diminution de l'intensité depuis I₄ au cours de la période de court-circuit pour atteindre une valeur minimale I₁ correspondant éventuellement à la valeur de l'intensité au début de la période de court-circuit. En fait, à la fin du temps de court-circuit survient la rupture du pont de métal liquide.

On comprend alors que le contrôle de la vitesse de déplacement du fil opéré dans le procédé de l'invention favorise un transfert rapide et bien contrôlé de la goutte de métal fondu ainsi qu'une rupture du pont de métal liquide à bas courant. Or, moins le courant auquel se produit cette explosion est élevé, moins le taux de projections est important.

Un autre cycle de court-circuit peut alors succéder au premier.

Un cycle de soudage pulsé est réalisé entre les balises H₁ et H₂. Il démarre ici au début d'une période d'arc d'un cycle de soudage par court-circuit. Il comprend un temps chaud entre H₁ et B₁ qui est suivi d'un temps froid entre B₁ et H₂. Le déplacement de l'électrode consommable vers la pièce est commandé ici à une vitesse sensiblement constante V_{P} pendant le cycle pulsé. Cette vitesse V_{P} est supérieure à V₁. Sur l'exemple représenté on commande un nouveau cycle de soudage par court-circuit après deux phases de soudage pulsé, de H₁ à H₂ et de H₂ à B'₂.

Un cycle de soudage pulsé est caractérisé par une vitesse d'avance du fil de l'électrode V_{P} et par deux jeux de paramètres électriques correspondant aux deux périodes constitutives d'un cycle : un temps chaud auquel correspond le tension U_{H} et intensité I_{H} et un temps froid auquel correspond le couple U_{B}, I_{B}.

Selon une variante au lieu d'une vitesse constante V_{P} pendant toute la phase de soudage pulsé, la vitesse d'avance du fil est distincte entre les temps chauds et froids, V_{PH} d'une part et V_{PB} d'autre part.

On comprend que l'on peut faire varier l'apport d'énergie à la pièce par le contrôle du ratio entre les deux modes de transfert. Un exemple de réglage pourrait être : deux cycles de soudage pulsé tous les trois cycles de soudage par court-circuit.

Conformément à une variante de réalisation, le soudage par transfert pulsé est à bas bruit tel que décrit dans le document FR-A-2756201. A cet effet, le procédé de soudage à l'arc en courant pulsé avec fil fusible et transfert de type « arc-spray » avec une seule goutte de métal fondu transféré du fil vers le cordon de soudure, à chaque impulsion de courant, se distingue par le fait que chaque impulsion de courant électrique présente des pentes de montée et/ou de descente comprises entre 50 et 1000 A/ms, de préférence à l'impulsion n'a pas une forme triangulaire.

L'invention concerne aussi un dispositif de soudage à l'arc comprenant une électrode consommable dont une extrémité est progressivement fondue par un courant électrique alimentant l'électrode, ledit dispositif étant configuré pour la mise en oeuvre du procédé décrit précédemment.

Il peut s'agir d'un dispositif de type connu, tel que celui décrit ci-avant, complété de moyens pour appliquer des cycles de soudage par court-circuit et des cycles de soudage par transfert pulsé, de façon alternée.

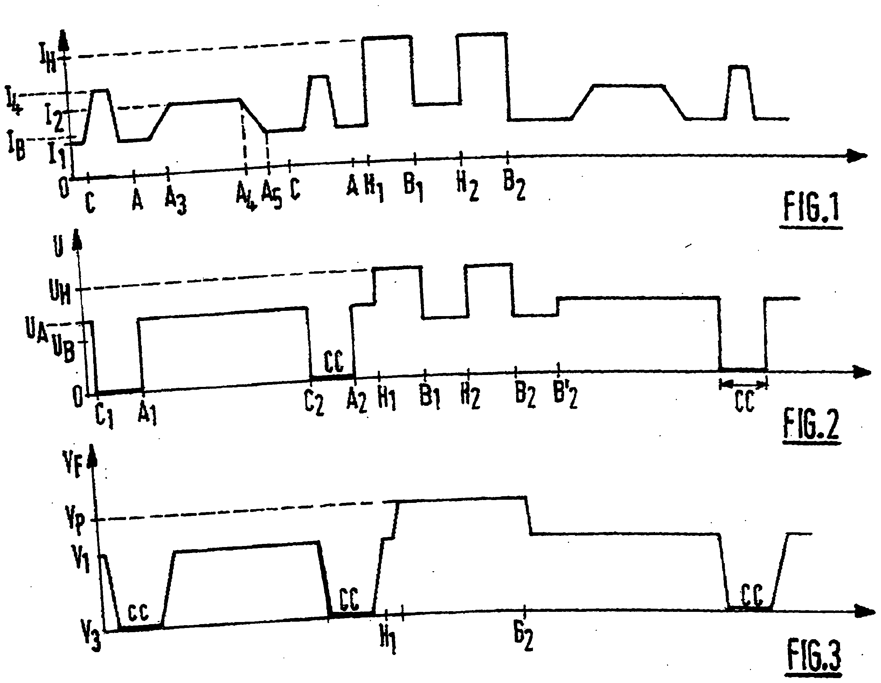

Le circuit de commande du moyen d'alimentation en courant électrique du fil fusible et l'unité d'entraînement dudit fil fusible pourront ainsi être paramétrés pour appliquer des profils de courant et de vitesse tels que, notamment, ceux décrits en relation avec les figures 1 et 3. Une unité de contrôle globale pourra être prévue pour les coordonner en ce sens.

Le générateur de courant dudit dispositif est prévu apte à délivrer des courants présentant une intensité, par exemple, supérieure à 300 A, notamment supérieure à 350 A.

Ledit dispositif pourra en outre comprendre en outre des moyens de paramétrage de l'alternance des cycles de soudage par court-circuit et des cycles de soudage par transfert pulsé. Ils comprennent, notamment, une interface homme-machine permettant à l'opérateur de choisir le nombre n₁ et n₂ de chaque cycle, ces données d'entrée étant transmises à ladite unité de contrôle globale.

## Revendications

1. Procédé de soudage à l'arc avec électrode consommable dont une extrémité est progressivement fondue par un courant électrique alimentant l'électrode, ledit procédé comprenant un nombre n₁, n₁>=1 de cycles de soudage par court-circuit alternant avec un nombre n₂, n₂>=1 de cycles de soudage par transfert pulsé, lesquels cycles de soudage par court-circuit comprennent chacun une période d'arc suivie d'une période de court-circuit où le métal en fusion établit un court-circuit avec un bain de fusion, **caractérisé en ce qu'**il comprend un déplacement de l'électrode à une vitesse V₁ pendant la période d'arc et une diminution de la vitesse de déplacement de l'électrode jusqu'à une valeur V₃, V₃<V₁, au cours de la période de court-circuit, et un déplacement de l'électrode à une vitesse Vₚ pendant le cycle par transfert pulsé, la vitesse Vₚ étant supérieure à la vitesse V₁.

2. Procédé selon la revendication 1, **caractérisé en ce qu'**il comprend plusieurs cycles de soudage par court-circuit à la suite entre au moins un cycle de soudage par transfert pulsé.

3. Procédé selon l'une des revendications précédentes, **caractérisé en ce qu'**il comprend plusieurs cycles de soudage par transfert pulsé à la suite entre au moins deux cycles de soudage par court-circuit successifs.

4. Procédé selon l'une quelconque des revendications précédentes, **caractérisé en ce qu'**il comprend une étape préalable de paramétrage du nombre n₁ desdits cycles de soudage par court-circuit et n₂ desdits cycles de soudage par transfert pulsé, en fonction de l'opération de soudage à effectuer.

5. Procédé selon l'une quelconque des revendications précédentes, **caractérisé en ce que** les cycles de soudage par transfert pulsé sont intercalés entre les cycles de soudage par court-circuit durant une période d'arc desdits cycles de soudage par court-circuit.

6. Procédé selon l'une quelconque des revendications précédentes, **caractérisé en ce que** la vitesse Vₚ de déplacement de l'électrode de soudage pendant le cycle de soudage par transfert pulsé est constante.

7. Procédé selon l'une quelconque des revendications 1-5, **caractérisé en ce que** le cycle de soudage par transfert pulsé comprend un temps chaud pendant lequel l'électrode est alimentée par un courant d'une intensité I_{H} et un temps froid pendant lequel l'électrode est alimentée par un courant d'une intensité I_{B}<I_{H}, la vitesse de déplacement du fil variant entre une valeur V_{PH} pendant le temps chaud et une valeur V_{PB} distincte de V_{PH} pendant le temps froid.

8. Procédé selon l'une quelconque des revendications précédentes, **caractérisé en ce que** les cycles de soudage par court-circuit comprennent :
- a) le maintien d'une intensité I₂ d'alimentation de l'électrode consommable pendant la période d'arc en même temps que le déplacement de l'électrode consommable à la vitesse V₁ ;
- b) la diminution de l'intensité pour atteindre une intensité minimale I₁ au début de la période de court-circuit, I₁<I₂ ;
- c) la diminution de la vitesse déplacement de l'électrode jusqu'à une valeur V₃, V₃<V₁ au cours de la période de court-circuit ;
- d) l'augmentation de l'intensité au cours de la période de court-circuit jusqu'à I₄, I₄>I₂ ;
- e) suivie d'une diminution de l'intensité pour atteindre I₁<I₂.

9. Procédé selon l'une quelconque des revendications précédentes, **caractérisé en ce qu'**une intensité du courant d'alimentation de l'électrode consommable varie selon une pente d'augmentation, respectivement de diminution, en début, respectivement en fin, des cycles de soudage par transfert pulsé.

10. Dispositif de soudage à l'arc comprenant une électrode consommable dont une extrémité est progressivement fondue par un courant électrique alimentant l'électrode, **caractérisé en ce que** ledit disposif est configuré pour la mise en oeuvre des étapes suivantes :
a) alimenter une extrémité de l'électrode pour progressivement fondre par un courant électrique ladite extrémité,
b) établir un procédé de soudage comprenant un nombre n₁, n₁>=1 de cycles de soudage par court-circuit alternant avec un nombre n₂, n₂>=1 de cycles de soudage par transfert pulsé, lesquels cycles de soudage par court-circuit comprennent chacun une période d'arc suivie d'une période de court-circuit où le métal en fusion établit un court-circuit avec un bain de fusion,
c) déplacer l'électrode à une vitesse V₁ pendant la période d'arc et diminuer la vitesse de déplacement de l'électrode jusqu'à une valeur V₃, V₃<V₁, au cours de la période de court-circuit, et déplacer l'électrode à une vitesse Vₚ pendant le cycle par transfert pulsé, la vitesse Vₚ étant supérieure à la vitesse V₁.

11. Dispositif selon la revendication 10, **caractérisé en ce qu'**il comprend des moyens pour appliquer des cycles de soudage par court-circuit et des moyens pour appliquer des cycles de soudage par transfert pulsé, de façon alternée.

12. Dispositif selon l'une des revendications 10 ou 11, **caractérisé en ce qu'**il comprend en outre des moyens de paramétrage de l'alternance des cycles de soudage par court-circuit et des cycles de soudage par transfert pulsé.

## Patentansprüche

1. Verfahren zum Lichtbogenschweißen mit Verbrauchselektrode, von der ein Ende durch einen elektrischen Strom, der die Elektrode versorgt, progressiv abgeschmolzen wird, wobei das Verfahren eine Anzahl n₁, n₁≥1 von Kurzschluss-Schweißzyklen alternierend mit einer Anzahl n₂, n₂≥1 von Pulstransfer-Schweißzyklen umfasst, wobei die Kurzschluss-Schweißzyklen jeder eine Lichtbogenperiode umfassen, der eine Kurzschlussperiode folgt, wo das schmelzende Metall einen Kurzschluss mit einem Schmelzbad bewirkt, **dadurch gekennzeichnet, dass** es eine Bewegung der Elektrode mit einer Geschwindigkeit V₁ während der Lichtbogenperiode und eine Verringerung der Bewegungsgeschwindigkeit der Elektrode auf einen Wert V₃, V₃<V₁, im Laufe der Kurzschlussperiode, und eine Bewegung der Elektrode mit einer Geschwindigkeit VP während des Pulstransferzyklus umfasst, wobei die Geschwindigkeit VP größer ist als die Geschwindigkeit V₁.

2. Verfahren nach Anspruch 1, **dadurch gekennzeichnet, dass** es mehrere Kurzschluss Schweißzyklen in Folge zwischen wenigstens einem Pulstransfer-Schweißzyklus umfasst.

3. Verfahren nach einem der vorhergehenden Ansprüche, **dadurch gekennzeichnet, dass** es mehrere Pulstransfer-Schweißzyklen in Folge zwischen wenigstens zwei aufeinander folgenden Kurzschluss-Schweißzyklen umfasst.

4. Verfahren nach einem der vorhergehenden Ansprüche, **dadurch gekennzeichnet, dass** es in Abhängigkeit der durchzuführenden Schweißtätigkeit einen vorherigen Schritt zum Parametrieren der Anzahl n₁ der Kurzschluss-Schweißzyklen und n₂ der Pulstransfer-Schweißzyklen umfasst.

5. Verfahren nach einem der vorhergehenden Ansprüche, **dadurch gekennzeichnet, dass** die Pulstransfer-Schweißzyklen während eines Lichtbogenzeitraums der Kurzschluss-Schweißzyklen zwischen den Kurzschluss-Schweißzyklen liegen.

6. Verfahren nach einem der vorhergehenden Ansprüche, **dadurch gekennzeichnet, dass** die Bewegungsgeschwindigkeit V_{P} der Schweißelektrode während des Pulstransfer-Schweißzyklus konstant ist.

7. Verfahren nach einem der Ansprüche 1-5, **dadurch gekennzeichnet, dass** der Pulstransfer-Schweißzyklus einen heißen Zeitraum umfasst, in dem die Elektrode durch einen Strom einer Stärke I_{H} versorgt wird, und einen kalten Zeitraum, in dem die Elektrode durch einen Strom einer Stärke I_{B}<I_{H} versorgt wird, wobei die Bewegungsgeschwindigkeit des Drahtes zwischen einem Wert V_{pH} während des heißen Zeitraums und einem von V_{PH} verschiedenen Wert V_{pB} während des kalten Zeitraums variiert.

8. Verfahren nach einem der vorhergehenden Ansprüche, **dadurch gekennzeichnet, dass** die Kurzschluss-Schweißzyklen Folgendes umfassen:
a) die Aufrechterhaltung einer Stromstärke I₂ zur Versorgung der Verbrauchselektrode während des Lichtbogenzeitraums gleichzeitig mit der Bewegung der Verbrauchselektrode mit der Geschwindigkeit V₁;
b) die Verringerung der Stromstärke, um eine minimale Stromstärke I₁ zu Beginn des Kurzschlusszeitraums zu erreichen, I₁<I₂;
c) die Verringerung der Bewegungsgeschwindigkeit der Elektrode auf einen Wert V₃, V₃<V₁ im Laufe der Kurzschlussperiode;
d) die Erhöhung der Stromstärke im Laufe des Kurzschlusszeitraums auf I₄, I₄>I₂;
e) gefolgt von einer Verringerung der Stromstärke, um I₁<I₂ zu erreichen.

9. Verfahren nach einem der vorhergehenden Ansprüche, **dadurch gekennzeichnet, dass** eine Stärke des Versorgungsstroms der Verbrauchselektrode gemäß einer Erhöhungssteigung bzw. Verringerungsneigung am Anfang bzw. am Ende der Pulstransfer-Schweißzyklen variiert.

10. Vorrichtung zum Lichtbogenschweißen, umfassend eine Verbrauchselektrode, von der ein Ende durch einen elektrischen Strom, der die Elektrode versorgt, progressiv abgeschmolzen wird, **dadurch gekennzeichnet, dass** die Vorrichtung dafür ausgebildet ist, die folgenden Schritte durchzuführen:
a) Versorgen eines Ende der Elektrode, um das Ende durch einen elektrischen Strom progressiv abzuschmelzen;
b) Festlegen eines Schweißverfahrens, das eine Anzahl n₁, n₁≥1 von Kurzschluss-Schweißzyklen alternierend mit einer Anzahl n₂,n₂≥1 von Pulstransfer-Schweißzyklen umfasst, wobei die Kurzschluss-Schweißzyklen jeder eine Lichtbogenperiode umfassen, der eine Kurzschlussperiode folgt, wo das schmelzende Metall einen Kurzschluss mit einem Schmelzbad bewirkt,
c) Bewegen der Elektrode mit einer Geschwindigkeit V₁ während der Lichtbogenperiode und Verringern der Bewegungsgeschwindigkeit der Elektrode auf einen Wert V₃, V₃<V₁, im Laufe der Kurzschlussperiode, und Bewegen der Elektrode mit einer Geschwindigkeit V_{P} während des Pulstransferzyklus, wobei die Geschwindigkeit V_{P} größer ist als die Geschwindigkeit V₁,

11. Vorrichtung nach Anspruch 10, **dadurch gekennzeichnet, dass** es Mittel zur Anwendung von Kurzschluss-Schweißzyklen und Mittel zur Anwendung von Pulstransfer-Schweißzyklen alternierend umfasst.

12. Vorrichtung nach einem der Ansprüche 10 oder 11, **dadurch gekennzeichnet, dass** es ferner Mittel zum Parametrieren des Alternierens der Kurzschluss-Schweißzyklen und der Pulstransfer-Schweißzyklen umfasst.

## Claims

1. Metal-arc welding method using a consumable electrode, one end of which is gradually melted by an electrical current supplied to the electrode, said method comprising a number n₁ n₁>=1 of short-circuit welding cycles alternating with a number n₂ n₂>=1 of pulsed transfer welding cycles, which short-circuit welding cycles each comprise an arc period followed by a short-circuit period in which the molten metal establishes a short circuit with a weld puddle, **characterised in that** it comprises movement of the electrode at a speed V₁ during the arc period and a reduction in the electrode movement speed to a value V₃ Va₃<V₁, during the short-circuit period, and a movement of the electrode at a speed Vₚ during the pulsed transfer cycle, the speed Vₚ being greater than the speed V₁.

2. Method according to Claim 1, **characterised in that** it comprises a plurality of consecutive short-circuit welding cycles between at least one pulsed transfer welding cycle.

3. Method according to one of the preceding claims, **characterised in that** it comprises a plurality of consecutive pulsed transfer cycles between at least two successive short-circuit welding cycles.

4. Method according to any of the preceding Claims, **characterised in that** it comprises a prior step of setting the number n₁ of said short-circuit welding cycles and n₂ of said pulsed transfer welding cycles, depending on the welding operation to be performed.

5. Method according to any of the preceding claims, **characterised in that** the pulsed transfer welding cycles are interspersed between the short-circuit welding cycles during an arc period of said short-circuit welding cycles.

6. Method according to any of the preceding claims, **characterised in that** the movement speed Vₚ of the welding electrode Is constant during the pulsed transfer welding cycle,

7. Method according to any of claims 1-5, **characterised in that** the pulsed transfer welding cycle comprises a hot time during which the electrode is supplied with a current of an intensity I_{H} and a cold time during which the electrode is supplied with a current of an intensity I_{B}<I_{H} the movement speed of the wire varying between a value V*_{PH}* during the hot time and a value *V_{PB}* different from V_{PH} during the cold time,

8. Method according to any of the preceding claims, **characterised in that** the short-circuit welding cycles comprise:
- a) maintaining an intensity I₂ of the supply to the consumable electrode during the arc period white the consumable electrode moves at speed V₁;
- b) reducing the intensity to reach a minimum intensity I₁ at the start of the short-circuit period, I₁<I₂;
- c) reducing the electrode movement speed to a value V₃, V₃<V₁ during the short-circuit period;
- d) increasing the intensity during the short-circuit period I₄, I₄>I₂;
- e) followed by reducing the intensity to reach I₁<I₂.

9. Method according to any of the preceding claims, **characterised in that** an intensity of the current supplied to the consumable electrode varies along an increase slope at the start and a decrease slope at the end of the pulsed transfer welding cycles.

10. Metal-arc welding device comprising a consumable electrode, one end of which is gradually melted by an electrical current supplied to the electrode, **characterised in that** said device is configured for the implementation of the following steps:
a) supplying an electrical current to one end of the electrode in order to gradually melt said end,
b)establishing a welding method comprising a number n₁, n₁>=1 of short-circuit welding cycles alternating with a number n₂, n₂>=1 of pulsed transfer welding cycles» which short-circuit welding cycles each comprise an arc period followed by a short-circuit period in which the molten metal establishes a short-circuit with a weld puddle,
c) moving the electrode at a speed V₁ during the arc period and reducing the electrode movement speed to a value V₃, V₃<V₁ during the short-circuit period, and moving the electrode at a speed Vₚ during the pulsed transfer cycle, the speed *Vₚ* being greater than the speed V₁.

11. Device according to Claim 10, **characterised in that** it comprises means for applying short-circuit welding cycles and means for applying pulsed transfer welding cycles alternately.

12. Device according to either claim 10 or claim 11, **characterised in that** it also comprises means of setting the alternation of the short-circuit welding cycles and the pulsed transfer welding cycles.
